# EUROPEAN PATENT APPLICATION

(11) **EP 4 618 326 A1**
(43) Date of publication of application: **17.09.2025**
(21) Application number: 24305371.7
(22) Date of filing: 12.03.2024
(51) Int. Cl.: H01S 3/067, H01S 3/1112, H01S 3/08022, H01S 3/094, H01S 3/16

(54) **FIBER LASER AND METHOD OF CONTROLLING A FIBER LASER**

(71) Applicant: Centre National de la Recherche Scientifique, 75016 Paris (FR); Université de Bourgogne, 21000 Dijon (FR)
(72) Inventor: COILLET, Aurélien, 21200 Beaune (FR); MOHAMED, Mostafa Ibrahim, 21000 Dijon (FR); GRELU, Philippe, 21850 Saint-Apollinaire (FR)
(74) Representative: Office Freylinger

(57) **Abstract**

A fiber laser device comprises a ring shaped resonator (1) to generate pulses in a mode-locked regime, the ring shaped resonator (1) comprising a doped fiber (10), a virtual saturable absorber (11) receiving the output of the doped fiber (10), a standard fiber (12) connected to the virtual saturable absorber (11) and connected in loop to the doped fiber (10), the resonator (1) including an isolator (16) for unidirectional laser propagation from the doped fiber (10) to the saturable absorber (11), the virtual saturable absorber (11) comprising a splitter (115) to output a part of the light as main output, The doped fiber (10) is selected to operates in a regime where the group-velocity dispersion is negative within the selected band, the splitter (115) outputting more than 85% of the light power from the resonator (1), the resonator (1) comprising filtering means (17) selecting a band of light coupled to the standard fiber (12). Method of controlling such a device.

## Description

### Technical Domain

The invention concerns a fiber laser device comprising a ring-shaped resonator to generate mode-locked pulses. It concerns also a method to control such a laser.

### Prior art

The modern era of ultrafast fiber lasers started in the early 90s' when, prompted by the optical communication revolution that spread the internet usage worldwide, reliable single-mode optical fibers and diode laser pumping were becoming widely available. Since then, the cost-effective and energy efficient fiber laser technology has been expanding without pause, replacing countless bulk laser systems in the industry and research institutes alike, as well as fostering novel applications in material processing, biotechnology, medicine, defense, and optical metrology.

A fundamental soliton is a pulsed waveform that propagates without distortion through balanced interactions within the propagation medium. In an optical fiber, a bright soliton can be obtained through a compensation between the nonlinear Kerr and anomalous dispersion effects. By operating in the anomalous dispersion regime which, for standard telecom silica fibers, takes place for optical wavelengths in the low-loss window around 1.5 micron, mode-locked fiber lasers can therefore generate optical solitons. The fundamental soliton represents an ideal optical pulse, as a bell-shaped chirp-free waveform (i.e. Fourier-transform limited). Nevertheless, it was soon realized that standard optical fibers would only support low energy solitons (in the 10s of pJ for a ~ 1 ps pulse), potentially hampering the generalization of ultrafast fiber lasers.

To generate pulses, a mode-locked fiber laser is not just a passive fiber link, but also includes non-linear losses from a saturable absorber mechanism and gain from a fiber amplifier section. Therefore, an ultrafast laser constitutes a complex nonlinear dissipative system, endowed with a large space of parameters. The wide range of solitary waves that can be generated from fiber lasers have been generalized into the denomination of dissipative solitons. The research on dissipative optical solitons has been quickly expanding in the past two decades, in connection with the fundamental discovery of original pulse waveforms and their dynamics.

In contrast to the conventional solitons that require anomalous dispersion in passive fibers, dissipative solitons can form in the normal dispersion regime where they are found to carry a much higher energy. Dissipative solitons are localized formations of the electromagnetic field balanced through an energy exchange with the environment in presence of nonlinearity, dispersion and/or diffraction, as explained by Philippe Grelu and Nail Akhmediev in "Dissipative solitons for mode-locked lasers", Nature Photonics, 6(2):84-92 (2012). Such energy exchange, combined with a necessary energy redistribution within the optical pulse, leaves a significant amount of frequency chirping as a signature. As a matter of fact, the generation of chirped pulses within the fiber laser oscillator has constituted a common strategy to find pulse waveforms carrying higher energy, in analogy with the well-known chirped-pulse amplification technology in optical amplifiers. Within fiber lasers, it started with dispersion-managed fiber lasers and successively diversified with all-normal and self-similar ultrafast fiber lasers, which opened the door to multi-nJ ultrashort pulses within of-the-shelf fiber technology. Nevertheless, the highly-chirped pulses that result from the latter approaches require extra-cavity compression and their associated spectral and temporal waveforms are generally not the desired smooth bell shape. The document US 2012/0033690 A1 shows an example of dispersion-managed fiber laser. It comprises a ring-shaped resonator to generate mode-locked pulses, the ring shaped resonator comprising an ytterbium doped fiber, a saturable absorber space receiving the output of the doped fiber, a standard fiber connected to the saturable absorber and connected in loop to the doped fiber, a laser pump connected to the ring shaped resonator through a multiplexer, the saturable absorber comprising a polarization beam splitter to output a part of the light as main output. The output passes through an amplifier and a compressor. The laser has the disadvantage to need onerous compressor and amplifier after the fiber ring.

### Description of the invention

The goal of this invention is to get the best of both soliton worlds, namely, the energetic (multi-nJ) ultrashort pulses enabled by dissipative soliton dynamics with the neat waveforms and contained frequency chirping that are characteristic of the conventional fiber soliton.

With this goal in view, the invention has for object a fiber laser device comprising a ring shaped resonator to generate pulses in a mode-locked regime, the ring shaped resonator comprising a doped fiber, a virtual saturable absorber receiving the output of the doped fiber, a standard fiber connected to the virtual saturable absorber and connected in loop to the doped fiber, the resonator including an isolator for unidirectional laser propagation from the doped fiber to the saturable absorber, the device comprising a laser pump connected to the ring shaped resonator through a multiplexer, the virtual saturable absorber comprising a splitter to output a part of the light as main output, the doped fiber being chosen to operate in a selected band of wavelength, characterized in that the doped fiber is selected to operates in a regime where the group-velocity dispersion is negative within the selected band, the splitter outputting more than 85% of the light power from the resonator, the resonator comprising filtering means selecting a spectral band of light coupled to the standard fiber.

In the present work, we conceived the cavity architecture to delineate low and high energy soliton propagation regions separated by strong nonlinear losses and spectral filtering. We recall that highly involved intracavity dynamics were highlighted in the "soliton-similariton" fiber laser. The latter allowed the formation and propagation, within the same oscillator, of a self-similar highly-chirped pulse in a normally-dispersive gain fiber, followed, after spectral filtering, by a low energy conventional soliton propagation in a passive telecom fiber. Instead, we here restrict to the usage of all-anomalous standard fiber components, which may first appear paradoxical. We demonstrate the possibility of obtaining a blend of conventional and dissipative soliton dynamics inside the cavity that enables the generation of high-energy bell-shaped pulses with limited frequency chirping. Such a unique blend is highlighted by the generation of more complex pulse structures at higher pump power, which resemble high-order solitons. Filtering means is any device that is spectrally very selective but does not add significant self-phase modulation effects on the pulse. The virtual saturable absorber could be any virtual saturable absorber, which signifies based on non-linear interferences, such as a non-linear Sagnac mirror.

According to other dispositions:
- the filtering means comprises a diffraction grating to reflect the light from the splitter to the standard fiber;
- the isolator is placed inside the saturable absorber downstream the splitter; when the isolator is based on the polarization, this place allows to exploit the known polarization at this state;
- the splitter outputs at least 90% of the light power from the resonator;
- the splitter is a polarization beam splitter; In this configuration, the virtual saturable absorber is based on the nonlinear evolution of the polarization in the optical fiber, associated with the polarization beam splitter.
- the virtual saturable absorber comprises a first polarization quarter-wave plate and a second polarization half-wave plate placed between the output of the doped fiber and the polarization beam splitter, a third polarization quarter-wave plate and a fourth polarization half-wave plate placed between the polarization beam splitter and the filtering means; these polarization plates allow to adjust the light beam polarization incident to the polarization splitter which can discriminate the nonlinear evolution of the light polarization;
- a dopant of the doped fiber is selected in the group comprising erbium, thulium and holmium;
- the doped fiber length is selected to allow to reach an unsaturated optical gain greater than 20dB, preferably more than 30 dB; the more the doped fiber is doped, the more the length of the doped fiber can be short;
- the standard fiber length is selected to adjust the repetition rate between 1 MHz and 40 Mhz; the more the standard fiber is long, the more the repetition rate is low.

The invention concerns also a method of controlling a fiber laser as described above, wherein the pump power is adjusted under a predetermined limit to output a single soliton pulse per cavity roundtrip. The resonator has a fundamental repetition rate and this controlling method installs only one soliton when the device is operated. In these conditions, the device can be operated such that the FWHM pulse lasts from 1 to 100 ps while keeping an optical peak power above 1.5 kW, which means an output optical pulse energy ranging from few to hundreds of nJ.According to an aspect of the method, the spectral filter bandwidth is adjusted to obtain a pulse duration from 1 to 100 ps at half maximum. The narrower the spectral bandwidth of the light transmitted to the standard fiber, the longer the pulse duration.

According to another aspect of the method, the spectral filter is adjusted to select the central wavelength of the pulse. The laser emission can therefore be tuned for example for example from 1535 to 1570 nm for erbium and from 1750 to 2000 nm for thulium doped fibers, within the gain bandwidth. We claim to obtain a function mode wherein the output pulses from the splitter are pulses with more than 3 nJ during less than 2 ps full-width at half maximum.

According to another aspect of the method, the pulse energy can range from a few to hundreds of nanojoules.

### Brief description of figures

The invention will be better understood and other features and advantages will become apparent from the description which follows, the description referring to the appended drawings among which :
- figure 1 is a schematic view of a laser device according to an embodiment of the present invention;
- figure 2 is a collection of diagrams illustrating the operation mode of the device in figure 1;
- figure 3 is a collection of diagrams from the simulation of the device, representing values along the ring resonator;
- figure 4 includes two diagrams representing respectively pump power, temporal width and pulse energy according to the repetition rate obtained by changing the standard fiber length;
- figure 5 is a collection of diagrams illustrating the device of figure 1 operated close to the pulse breaking limit;
- figure 6 is a collection of diagrams illustrating the evolution of output when raising the power of the pump, and the transition from high order soliton to high order soliton molecule regime;
- figure 7 is a collection of diagrams illustrating an operation mode where pulses are soliton molecules;
- figure 8 is a collection of diagrams illustrating an operation mode with high power of the pump.

### Detailed description

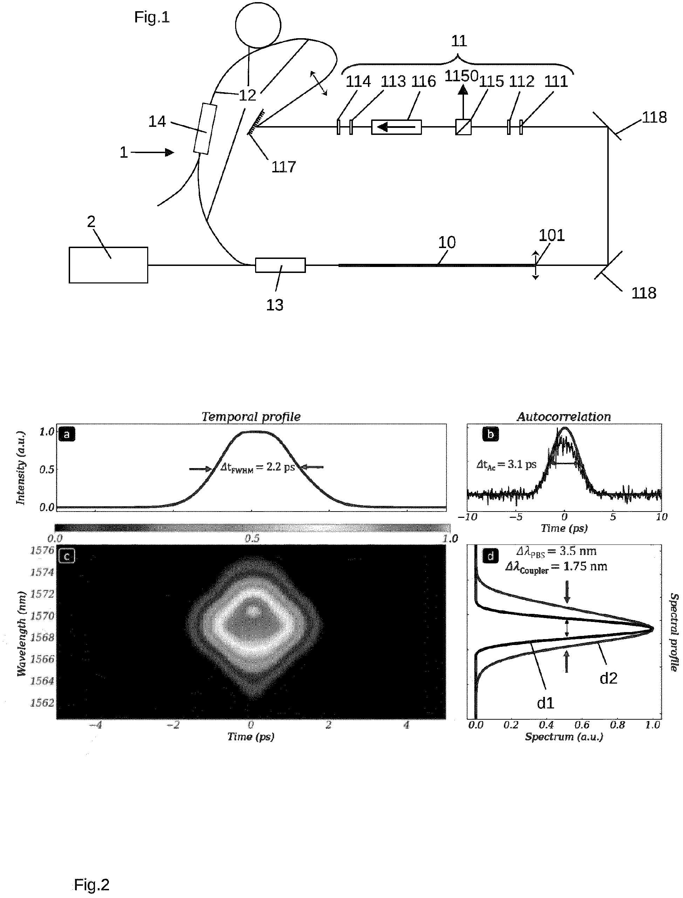

A ring laser device is schematically shown in Fig. 1. It comprises a ring-shaped resonator 1 to generate mode-locked pulses. The ring-shaped resonator 1 comprises a doped fiber 10, represented with a bold line, a saturable absorber 11 receiving the output of the doped fiber 10, filtering means 17 to select a band of light from saturable absorber 11 coupled to a standard fiber 12 connected in loop to the doped fiber 10. The device comprises also a pump laser 2 connected to the ring-shaped resonator 1 through a multiplexer 13.

A free space section comprises, successively from the output 101 of the doped fiber 10, two mirrors 151 to orient the light beam in a reverted direction to the saturable absorber 11. The saturable absorber 11 comprises a first polarization quarter-wave plate 111 and a second polarization half-wave plate 112, a polarization beam splitter 115 to output a part of the light as main output, a third polarization quarter-wave plate 113 and a fourth polarization half-wave plate 114. The free space section comprises also an isolator 16 for unidirectional laser propagation placed downstream the polarization beam splitter 115.

The filtering means 17 comprises a diffraction grating to reflect the light from the saturable absorber 11 to the standard fiber 12.

The doped fiber 10 is a gain medium of 1.5-meter long erbium-doped fiber (EDF, ER80/125) which has opto-geometrical features close to those of a standard telecom fiber such as SMF-28e (trademark of Coming), and therefore operates in the anomalous dispersion regime within a 1535-1590 nm selected band. Thus, when operated within the selected range, the group-velocity dispersion is negative.

The pump 2 is a Raman fiber laser (KEOPSYS) operating at 1480 nm coupled through a wavelength-division multiplexer (WDM, Thorlabs WD 1450B) acting as multiplexer 13 to the standard fiber 12. At the end of the doped fiber 10, the laser field is decoupled from the fiber to propagate in a short distance free-space section that enables to accurately control its polarization with the first quarter-wave plate 111 and the second half-wave plate 112, and to discriminate polarizations through the polarizing beam splitter 115 (PBS). The rejection port of the polarizing beam splitter 115 serves as the main laser output port 1150. As a peculiar feature of the present cavity, this output port typically extracts at least 85% of the light energy, and preferably above 90 % of the intracavity power in the form of high quality energetic pulses, as developed below.

Owing to the nonlinear polarization evolution (NPE) taking place during pulse propagation in the optical fibers, the polarization discrimination enables a virtual saturable absorber effect.

The polarization wave plates 111 to 114 allow to adjust the nonlinear transfer function of the virtual saturable absorber 11. Filtering means 17 is here a diffraction grating with 600 lines per millimeter. By recoupling the laser light into the standard fiber 12 after experiencing spatial dispersion by the grating, spectral selection is achieved, which also enables tuning of the central wavelength. The subsequent propagation in the standard fiber 12 takes place at a reduced optical peak power that is comparable to the conventional fundamental (N=1) soliton power. Therefore, the laser architecture allows a great flexibility with respect to the length of standard fiber 12 used. For instance, we verified that a standard fiber 12 length ranging from 3 to 100 meters enables to adjust the fundamental cavity repetition rate from approximately 2 to 35 MHz, without affecting much of the pulse features. By setting the orientations of the wave plates around the light beam axis and of the diffraction grating, reproducible self-starting mode locking regimes are obtained.

The main output port delivers picosecond pulses with typically 1-10 kW of peak power. These pulses are characterized in the spectro-temporal domain with a free-space Frequency Resolved Optical Gating (FROG) device. For a complementary monitoring and analysis of the laser dynamics, we use a low power, output coupler 14 that extracts 10 % of the laser power from the passive standard fiber 12 part of the cavity, as secondary output. This output is monitored from a fast photodetector (OE695G, 9.5GHz) connected to a 6-GHz oscilloscope (LeCroy wavePro 760Zi, 40GSa/s). A home-made second-order background-free auto-correlator complements the temporal analysis with a long scan range of ~ 300 ps. The secondary laser output is also monitored with an optical spectrum analyzer (Anritsu MS9710B).

Figure 2 displays the features of a typical mode-locked pulse of 2-ps full-width at half maximum (FWHM) duration obtained at a pump 2 power of 1.34 W. The diagram of part (a) of the figure 2 represents the retrieved pulse intensity, part (b) the multi-shot second-order auto-correlation trace, the part (c) is a FROG spectrogram, and the diagram (d) represents the pulse optical spectrum at multiplexer d1 and at splitter output d2. The high-energy from polarization beam splitter 115 output port 1150 yields an average power of 105 mW, which corresponds to a pulse energy of E_{PBS} ~ 3 nJ at the fundamental 34.9-MHz repetition rate. Such pulse energy is about two orders of magnitude higher than the conventional soliton energy which is about 30 pJ that would be supported by the standard anomalous optical fibers used in the cavity assuming the same pulse duration. This remarkable feature results from the overall highly dissipative cavity design, which incorporates large nonlinear losses, significant spectral filtering, and high gain. Precisely, the applied spectral filtering is crucial to reshape the pulse, allowing the subsequent amplification stage to take place at high gain without being readily affected by the multi-pulsing instability that is otherwise ubiquitous in ultrafast lasers composed of anomalously-dispersive fibers. Another enabling key is that the propagation of high-energy pulses in the fiber waveguide is limited to a short length by the end of the amplifier section, which limits the accumulated nonlinear phase. As a matter of fact, Fig. 2d displays a bell-shaped spectral pulse profile devoid of any radiation peak - such as the Gordon-Kelly sidebands that plague most of the spectra of anomalous fiber lasers. A complete amplitude and phase retrieval of the stable pulse by FROG highlights a gently flat-topped temporal pulse shape with a concave phase profile, as shown in Fig. 2a. The presence of a moderate positive chirp despite the anomalous propagation reflects the predominant influence of the self-phase modulation (SPM) on the pulse within the amplifier section. This enables for instance pulse compression by propagation in an anomalous extra-cavity standard fiber 12 segment, as shown below.

The present all-anomalous laser cavity supports dissipative solitons of an original nature. It removes the compelling use of normally-dispersive fibers to reach multi-nJ pulse energies in telecom band lasers employing standard fibers, i.e. not resorting to the large mode area (LMA) fiber technology. As a matter of fact, the pulse energy achieved here compares well with that obtained in other laser architectures using normally-dispersive fibers, such as dispersion-managed and soliton-similariton laser cavities. Nevertheless, in most of the intracavity fiber stretches, the pulse propagation takes place at a relatively low power, as monitored at the secondary laser output. The latter features a 18 pJ pulse energy (0.65 mW average power), a spectral width of 1.75 nm, and 2.2-ps pulse duration, as seen in Figs. 2b,d.

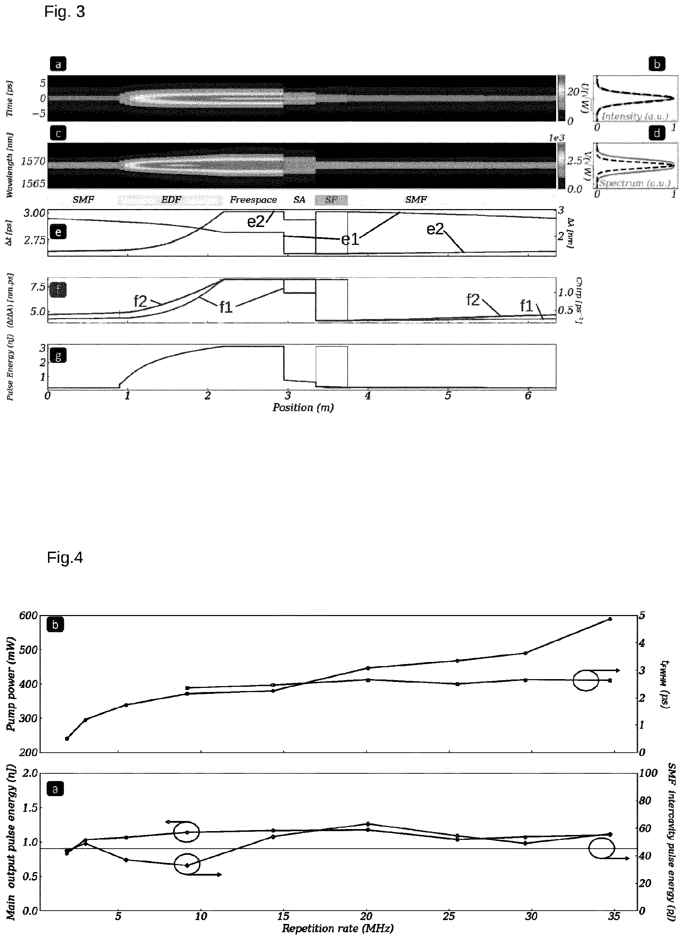

To gain a deeper understanding of the laser intracavity dynamics, we conducted numerical simulations of the pulse propagation in the cavity sketched in Fig. 1, using an extended nonlinear Schrödinger equation model for the fibers and discrete transfer functions for lumped optical elements. The simulation results are presented in Fig.3. Part (a) of Fig.3 is a colormap of the temporal fields' evolution along the resonator ring, the start being where the coupler 14 is placed. The different sections of the ring are referenced as follows: SMF for the standard fiber, EDF for the doped fiber, SA for the saturable absorber and SF for the filtering means. Part (b) of Fig.3 is a snapshot of the temporal intensity of the splitter (plain curve) and the coupler (dashed curve) output ports. Part (c) of Fig.3 is a colormap of the spectral field evolution along the resonator ring, in a nanometer scale. Part (d) of Fig.3 is a snapshot of the spectrum intensity of the splitter (plain curve) and the coupler (dashed curve) output ports. Part (e) represents the evolution of the pulse width (FWHM, e1) and the spectral width (FWHM, e2). Part (f) represents the evolution of the time-bandwidth product (FWHM, f1) and the frequency chirp (f2). Part (g) represents the evolution of the pulse energy, in nJ.

The results can be summarized as follows. A low-energy, nearly chirp-free soliton pulse is transferred from the passive standard fiber 12 to the amplifier fiber section. The amplification procures a large gain of the order of 20 dB, resulting in a high-energy pulse that becomes subjected to spectral broadening and pulse compression as it propagates in the anomalous dispersion fiber, as seen in Fig. 3(e, g). The simulation retrieves the positive chirp, which is calculated across the pulse peak, as shown in Fig. 3(f). Above 85% of the pulse energy is extracted by virtue of the effective saturable absorber effect. Finally, the pulse is spectrally filtered by filtering means 17, which removes most of its chirp and allows soliton-like propagation after being re-coupled into the standard fiber 12.

The soliton-like propagation within the standard fiber 12 allows us to alter the length of the standard fiber 12 section while maintaining the overall dynamical stability, which has been first demonstrated numerically and as shown in Fig. 2. The experimentation confirms this feature, obtaining mode locking with nearly identical pulse output after incorporating various standard fiber 12 lengths, up to 100 meters. Results are represented in Fig.4 where diagrams show values according to repetition rate, which is changed with the length of the standard fiber 12. In these experiments, the pulse energy was fixed yielding approximately 1 nJ at the main output. In diagram of part (a), the main laser output pulse energy 4a1 is represented according to the scale at left versus, wherein the intracavity pulse energy 4a2 along the standard fiber is represented according to scale at right, the line 4a3 represents the conventional soliton energy (~ 45 pJ) of (FL ΔtFWHM ~ 1.45ps) pulse propagating along the passive SMF fiber, according to scale at right. In diagram of part (b), the curve 4b1 represents the pump power (scale in mW at left) and the curve 4b2 represents pulse duration of the main laser output port (scale in ps at right). We demonstrate a fixed pulse energy with nearly identical pulse duration at widely variable repetition rates, which also entails operating at a reduced pump power when the repetition frequency is lowered, as shown in part (b) of Fig. 4.

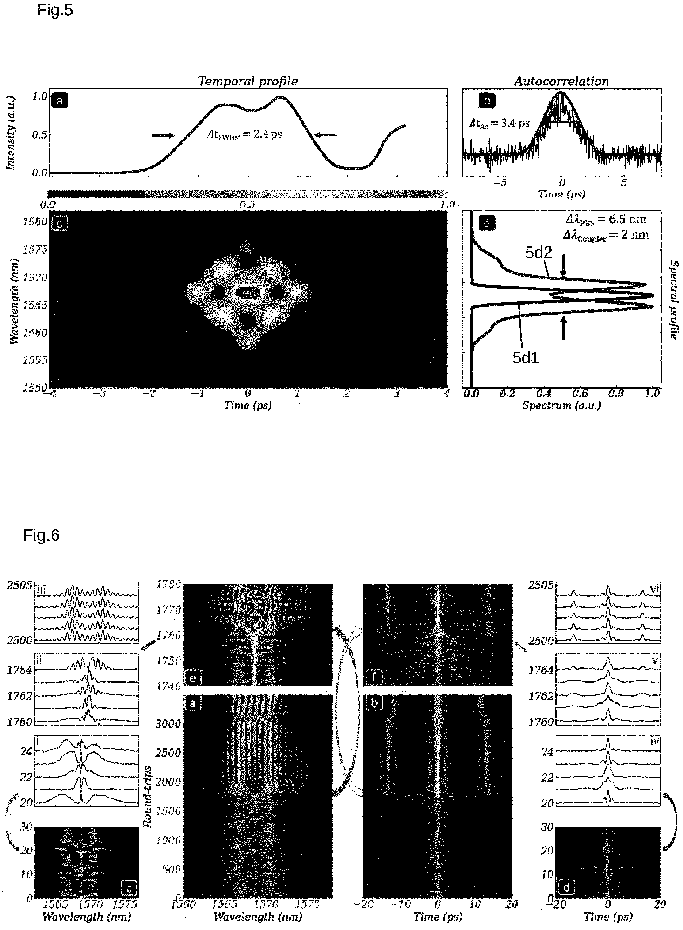

The following experiment is illustrated in Fig.5, wherein the diagram of part (a) represents the retrieved pulse intensity, the part (b) the multi-shot second-order auto-correlation trace, the part (c) is a FROG spectrogram and the diagram (d) represents the pulse optical spectrum at coupler 5d1 and at splitter output 5d2. The possibility to output higher pulse energy and average power is demonstrated, reverting to the 34.9 MHz repetition rate and increasing the pump power to 1.58 W. The second-order auto-correlation trace has a ~ 3.4-ps width. In the same regime, the output coupler delivers a 16-pJ pulse energy, whose second-order multi-shot auto-correlation trace (~ 2.9-ps duration) and optical spectrum are displayed in (b) and (d). Mode locking yields an average power of 160 mW and 0.57 mW from the main and secondary output ports, respectively. The corresponding pulse energy from the main output is 4.6 nJ, which corresponds to a peak power around 1.9 kW for a pulse duration of 2.2 ps. From that power level, the pulse starts featuring significant deformations in both spectral and time domains, as seen from the FROG retrieval displayed in part (c) of Fig 5. We estimate that most of these deformations take place during the final propagation stretch of ~ 25 cm within the amplifier section. Since the pulse propagates in the anomalous dispersion regime, the spectral and temporal pulse deformations are associated with the initial stage of the propagation of a high-order soliton, where spectral broadening and frequency chirping are expected to acquire an important magnitude. This is reflected in the calculated Fourier-transform-limited pulse duration, which goes down to around 0.4 ps, a value six times lower than the FWHM pulse duration. Accordingly, a lower estimate of the soliton number is N ≃ 3.4. To gain further insight into this high-order soliton, we allow it to propagate outside the cavity along different segments of standard fiber 12.

Consequently, a further pump power increase (all other laser parameters being fixed) will result in the pulse breakup with a transition into the multi-pulse laser dynamics. To gain a deeper insight of that transition process, we record optical spectra in real time using the time-stretch dispersive Fourier transform (DFT) technique. A typical scenario is represented in Fig. 6, where 3500 consecutive laser output spectra and their Fourier transforms are displayed when the pump power is too high to allow for stable, single-pulse operation. We highlight three successive phases of the transition. First, Figs. 6(i,iv) show the dynamics before the multi-pulse transition: the pulse's spectral and related temporal deformations display a striking similarity with high-order soliton dynamics. Nevertheless, noting that they take place over consecutive cavity roundtrips and not along a homogeneous propagation medium, they rather bear a close relationship with the pulsating spectral dynamics.

Indeed, parts (c) and (d) of Figs. 6 in colormap highlight long-period spectral pulsations around the central wavelength, which are attributed to the excess of self-phase modulation (SPM). In essence, the excess of SPM within the anomalous propagation regime initiates a high-order soliton propagation, which triggers dissipative soliton pulsations over consecutive cavity roundtrips: we here have an original blend of conventional (high-order soliton) and dissipative (limit cycle attractor) soliton dynamics. This initial phase is followed by a second one, depicted in Figs. 6(ii,v): pulse breakup occurs and a soliton molecule takes shape over a few cavity roundtrips. We note the absence of dispersive waves in the process, in contrast to what is routinely observed for multi-pulse transitions taking place in anomalous fiber lasers. We attribute this feature to the presence of a relatively strong spectral filter, which is confirmed by numerical simulations. Over the subsequent roundtrips, the soliton molecule undergoes a significant spectral broadening, then acquires a marginal stability from roundtrips ~ 2000 to ~ 3000. The soliton molecule spectra and their Fourier transforms in Figs. 6(iii,vi) are signatures of high-order solitons: remarkably again, the laser dynamics blends typical dissipative soliton dynamics - here, a soliton molecule attractor - with conventional high-order soliton propagation that takes place within a delineated part of the laser cavity.

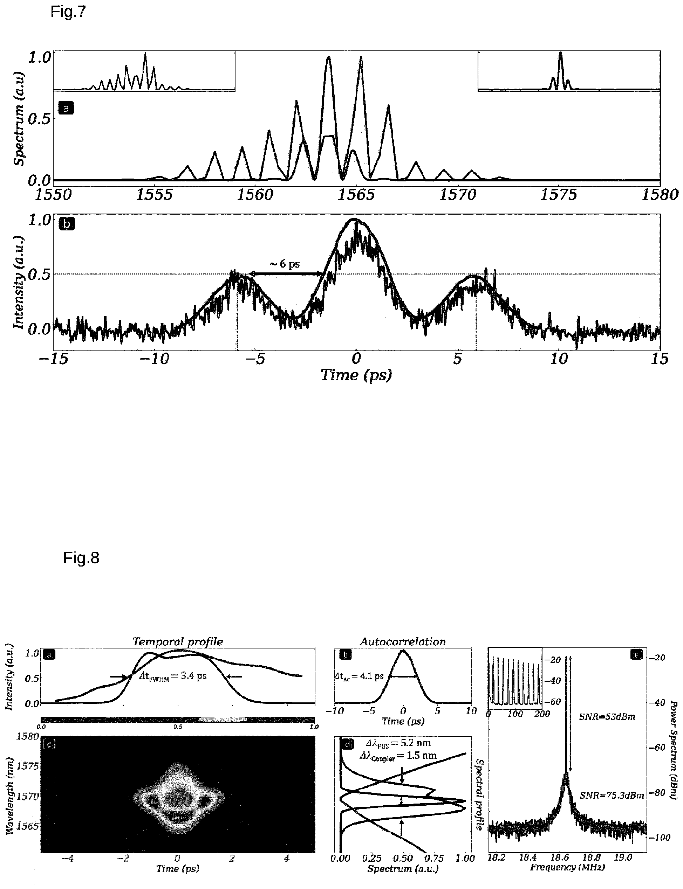

In subsequent experimental runs, we adjusted the laser parameters to single out stable high-order soliton molecule (HOSM) dynamics and characterize them in more details. Figure 7 is an example of a stable HOSM consisting of two pulses separated by 6 ps, obtained at a repetition rate of 18.65 MHz with an average output power of 185 mW (main output) and 0.8 mW

(secondary output), at a pump power of 1.58 W. Thus, the main output port delivers a HOSM of 10 nJ, which makes 5.0 nJ per constituent pulse. It is instructive to compare the stationary soliton molecule features observed from the two laser outputs. The optical spectrum taken from the main output, after the amplification stage, displays the broad oscillating features that make a connection with high-order solitons as well as the highly-contrasted periodic fringes that indicate the stable self-locking between two soliton pulses with a 6-ps relative timing, thereby constituting a stationary temporal soliton molecule, as shown in part (a) of Fig. 7. As expected, the secondary output displays spectral fringes of the same periodicity. The second-order optical autocorrelation traces displayed in part (b) of Fig. 7 also measure the relative separation at 6.0 ps from both output ports. Nevertheless, the soliton molecule is significantly affected by spectral filtering, which shrinks its optical spectral bandwidth by roughly a factor of three. Since the individual pulse duration, inferred from the autocorrelation traces, remains at ~ 3 ps FWHM, the effect of the localized spectral filter is to remove most of the frequency chirping, leaving a nearly chirp-free low-energy soliton molecule after the latter is recoupled into the passive standard fiber 12 section. Let us summarize the observed dynamics as follows. The overall dynamics is that of a stable soliton molecule. In spite of being stationary over successive roundtrips with an interpulse separation kept constant, the molecule is drastically affected by the strength of the dissipative effects taking place along a single roundtrip. After the amplifier section, as the pulses resemble higher-order solitons, we observe a high-order soliton molecule (HOSMs). Its limited propagation along the amplifier prevents pulse splitting. After being subjected to the removal of around 90 % of its energy and to spectral filtering, the soliton molecule takes the form of a molecule of fundamental non linear Shrödinger solitons, which can propagate without signicant deformation along a relatively long standard fiber 12 link, features confirmed by our numerical simulations.

The intracavity spectral filter represents a valuable degree of freedom to optimize the output pulse energy. We find that reducing its bandwidth allows for a higher-energy pulse extraction consecutive to the amplification taking place with a higher gain. Our simulations predict an output pulse energy above 50 nJ, provided that the filter bandwidth goes down to 0.2nm. In the present experiment, we could generate a stable high-energy pulse mode locking at a filter bandwidth of 1 nm obtained by inserting a pair of lenses functioning as a telescope after the diffraction grating.

Figure 8 presents the mode locked pulse features, obtained at a pump power of 2 W and a fundamental repetition rate of 18.65 MHz. The average output power is measured at 224 mW and 0.5 mW from the splitter and the secondary output ports, respectively. This represents a single pulse energy of ~ 12 nJ from the main output port. The high-energy pulse is characterized by the FROG technique using free-space coupling. The pulse features a flat-top intensity profile of estimated 3.4-ps FWHM duration, which corresponds to a peak power around 3.5 kW. The pulse is positively chirped, with most of the chirp being removed after spectral filtering. Mode locking is self-starting, exhibiting a long-term stability and a favourable signal-to-noise ratio, as shown in part (e) of Fig 8.

Other tests have been conducted. Similar results are obtained with a thulium doped fiber with a central wavelength in the range 1,7 to 1,9 µm, and with a pump laser at 5 W and 1600 nm wave length.

The invention is not limited to the embodiment described only for example purposes. The isolator could be of any technology and placed in another place in the resonator.

## Claims

1. Fiber laser device comprising a ring shaped resonator (1) to generate pulses in a mode-locked regime, the ring shaped resonator (1) comprising a doped fiber (10), a virtual saturable absorber (11) receiving the output of the doped fiber (10), a standard fiber (12) connected to the virtual saturable absorber (11) and connected in loop to the doped fiber (10), the resonator (1) including an isolator (16) for unidirectional laser propagation from the doped fiber (10) to the saturable absorber (11), the device comprising a laser pump (2) connected to the ring shaped resonator (1) through a multiplexer (13), the virtual saturable absorber (11) comprising a splitter (115) to output a part of the light as main output, the doped fiber (10) being chosen to operate in a selected band of wavelength, **characterized in that** the doped fiber (10) is selected to operates in a regime where the group-velocity dispersion is negative within the selected band, the splitter (115) outputting more than 85% of the light power from the resonator (1), the resonator (1) comprising filtering means (17) selecting a spectral band of light coupled to the standard fiber (12).

2. Fiber laser according to claim 1, wherein the filtering means (17) comprises a diffraction grating to reflect the light from the splitter (115) to the standard fiber (12).

3. Fiber laser according to one of the preceding claims, wherein the isolator (16) is placed inside the saturable absorber (11) downstream the splitter (115).

4. Fiber laser according to one of the preceding claims, wherein the splitter (115) outputs at least 90% of the light power from the resonator (1).

5. Fiber laser according to one of the preceding claims, wherein the splitter is a polarization beam splitter (115).

6. Fiber laser according to claim 5, wherein the virtual saturable absorber (11) comprises a first polarization quarter-wave plate (111) and a second polarization half-wave plate (112) placed between the output of the doped fiber (10) and the polarization beam splitter (115), a third polarization quarter-wave plate (113) and a fourth polarization half-wave plate (114) placed between the polarization beam splitter (115) and the filtering means (17).

7. Fiber laser according to one of the preceding claims, wherein a dopant of the doped fiber (10) is selected in the group comprising erbium, thulium and holmium.

8. Fiber laser according to one of the preceding claims, wherein the doped fiber (10) length is selected to allow to reach an unsaturated optical gain greater than 20dB, preferably more than 30 dB.

9. Fiber laser according to one of the preceding claims, wherein the standard fiber (12) length is selected to adjust the repetition rate between 1 MHz and 40 MHz.

10. Method of controlling a fiber laser according to one of the preceding claims, wherein the pump power is adjusted under a predetermined limit such that pulses at output are soliton single pulses.

11. Method according to claim 10, wherein the spectral filter (17) bandwidth is adjusted to obtain a pulse duration from 1 to 100 ps at half maximum.

12. Method according to claim 10 or 11, the spectral filter (17) is adjusted to select the central wavelength of the pulse.

13. Method according to one of the claims 10 to 13, wherein the pulse energy can range from a few to hundreds of nanojoules.
